# EUROPEAN PATENT SPECIFICATION

(11) **EP 3 414 159 B1**
(45) Date of publication and mention of the grant of the patent: **06.05.2020**
(21) Application number: 17713088.7
(22) Date of filing: 10.02.2017
(51) Int. Cl.: B64C 27/20, B64C 29/02

(54) **A ROTOR SYSTEM AND AN AIR VEHICLE EQUIPPED WITH SUCH A ROTOR**
ROTORSYSTEM UND EIN LUFTFAHRZEUG MIT SOLCH EINEM ROTOR
SYSTÈME DE ROTOR ET VÉHICULE AÉRIEN ÉQUIPÉ D'UN TEL ROTOR

(30) Priority: 10.02.2016 TR 201601741
(43) Date of publication of application: 19.12.2018
(73) Proprietor: Gaziantep Universitesi Rektörlügu, 27310 Sehitkamil Gaziantep (TR)
(72) Inventor: GOV, Ibrahim, 27310 Sehitkamil/Gaziantep (TR); GUZELBEY, Ibrahim Halil, 27310 Sehitkamil/Gaziantep (TR); DOGRU, Mehmet Hanifi, 27310 Sehitkamil/Gaziantep (TR)
(74) Representative: Handanoglu, Erdal
(86) International application number: PCT/TR2017/050058
(87) International publication number: WO 2017/138902

(56) References cited:
- EP-A1- 2 813 428
- US-A- 3 054 578
- US-A- 4 598 887
- US-A1- 2007 034 738

## Description

### Subject of the Invention

The invention is about a rotor system which enables the conventional helicopters to offer safer and more stable flights without the need for tail and tail rotor (anti-torque rotor) and features compensating elements for the torque created by the propeller, and a new air vehicle embodying such a rotor system.

### Background of the Invention and the State of the Art

The present invention relates to a rotor for air vehicles.

Conventional helicopters consist of a main fuselage comprising passenger or cargo cabin, a tail boom, a main rotor component on the main fuselage and a tail rotor, a.k.a. anti-torque rotor, located on the tail boom in order to compensate for the torque generated by the main rotor.

The existing state of the art reveals that, in the conventional helicopter systems equipped with tail rotor, a tail rotor is used to compensate for the torque effect generated by the main rotor of the helicopter and enable helicopter to turn around its axis, in other words, to maneuver as much as required.

The distance of the tail rotor from the main rotor is inversely proportional to the power of the tail propeller. The longer the length of the tail, the less power is required. This is because the compensation of the torque generated by the main rotor is achieved by the tail rotor on the basis of a logical equation that torque is force times lever arm.

Various improvements have been introduced to the tail rotor in order to increase the flight stability of the helicopters. However, despite the innovations introduced to the main rotor system, the problems originating from the tail system itself have remained unsolved. The tail systems integrated to the conventional helicopters pose hazard for the flight crews and flight environment during landing, departure and voyage inside a windy weather due to the long tail boom.

In order to eliminate this problem, air vehicles not having tail rotor but rotor, have been developed, which operates in accordance with the working principles of a helicopter. These improved systems are called flying platforms. However, in these developments, the steering and maneuvering of the air vehicles (flying platforms) is achieved through the pilot's body movements. In addition, two propellers positioned one over the other and rotating in the opposite direction are used in these systems.

As an example to the known status of the art, the American Patent No. US3054578 A can be given. Said patent relates to an annular aircraft with elastic collector ring rim. The invention relates to aircraft, and relates more particularly to aircraft that is either piloted or operated by remote control and that is capable of hovering, and capable of Bight in any desired direction still more particularly, the invention relates to means for stabilization and piloting control of such a craft. It is among the principal objects of the invention to provide for such an aircraft that is easily maneuvered, simple to pilot and to stabilize. In the aircraft having a propeller the axis of which being substantially vertical, a collector guiding the airstream downwards energized by the propeller and supporting the motor driving -the propeller said collector -being co-axial with the propeller axis and having an enlarged collecting portion disposed upstream of the propeller, stabilizing and piloting means comprising in combination at thickened and deformable elastic rim at the top edge of the collector, and means to deform 'by parts said rim of the collecting portion for stabilizing and piloting the aircraft.

As another example, the American Patent No. US4598887 A, relates to rotary wing flying craft, comprising at least two rotor blades rotatable around a normally vertical axis, at least one driving means for driving the rotor blades and a cabin for receiving loads. In flowing direction of the air stream generated by the driving means, an air channel is formed in the cabin and penetrates the same, with the inlet opening of the air channel provided on the top side of the cabin and the outlet opening of the air channel provided on the bottom side of the cabin. Two spatially superposed guide vane systems are provided in the air channel, one of these guide vane systems being formed as a guide vane ring loosely rotatably supported in relation to the driving means, on which ring the rotor blades are mounted, while the other guide vane system is provided for the compensation of the counter torque.

The European Patent No. EP2813428 A1 concerns a vertical take-off and landing aerial vehicle flying thanks to a propulsion system (e.g. one or more propellers) that generates an upward force (lift) to counter gravity. The present invention proposes a vertical take-off and landing aerial vehicle comprising an inner frame (312), a gimbal system (301) and an outer frame (304), said inner frame comprising a propulsion system (101,102) and a control system, said propulsion system being able to generate a lift force, said control system being able to control the orientation of the inner frame, said gimbal system connecting the inner frame to the outer frame with at least two rotation axis allowing rotation freedom between the outer frame to rotate independently from the inner frame.

Another example for the known status of the art is the American Patent No. US2007034738, relates to manned and unmanned vertical takeoff and landing (VTOL) vehicles, and particularly to a ducted, magnetic induction engine used in such VTOL aircraft for vertical, hover and horizontal flight, and to an air vane assembly, steering assemblies, and other flight controls for maneuvering and controlling translational movement of such VTOL vehicles.

An unbiased technical problem intended to be solved is the achievement of an air vehicle equipped with the components of a mechanism that requires no tail boom and offers turns and maneuvers without the need for controlling them with the body movements of a pilot. Technical effect to be obtained from the solution of this problem will be to improve the flight safety and stability of the air vehicle. Attempts, in this regard, have been made to develop a system to replace tail boom and tail rotor system used to provide the stability of a helicopter and maneuverability around its axis in the existing technique.

### Description of the Invention

The objective of the invention is to eliminate the tail and the tail mechanism problems experienced in the existing helicopters. The subject helicopter of the invention has no tail system unlike conventional helicopters which are made up of body and tail.

In the developed system, a single rotor system is employed instead of the eliminated tail boom and the tail rotor mechanism. Overall weight of the air vehicle is reduced by this means. The system which is the subject of the invention will be able to achieve safer and more stable flights since the tail group is removed. Air vehicles comprising the rotor system of the invention can be employed for many different purposes such as security, unmanned air vehicle, transportation and health.

The basic heuristic concept in the new rotor system is based on the principle to eliminate the tail system available in the conventional helicopters and accordingly the anti-torque rotor system integrated to the tail boom.

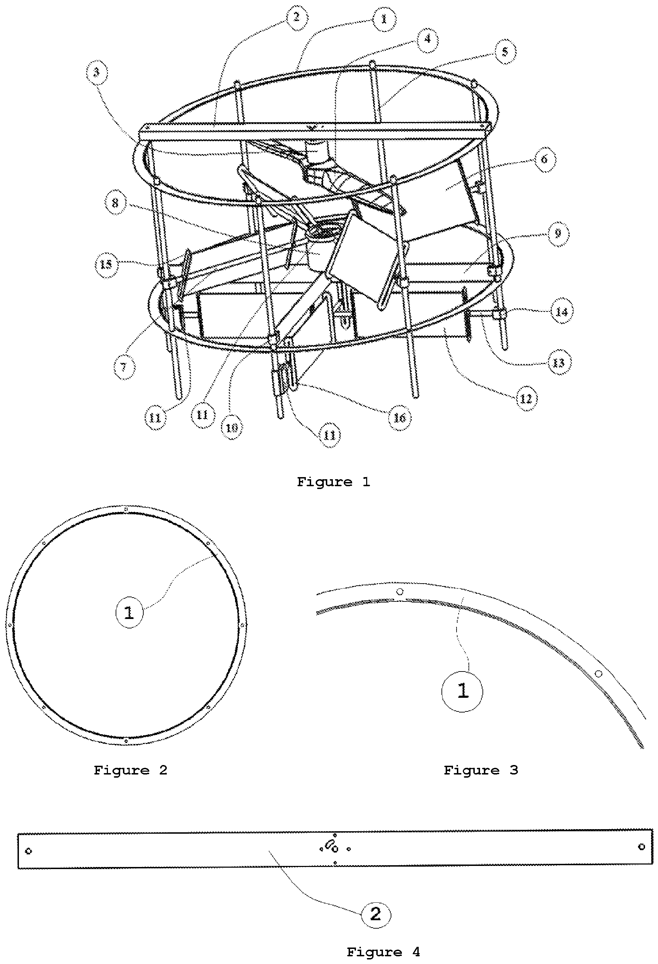

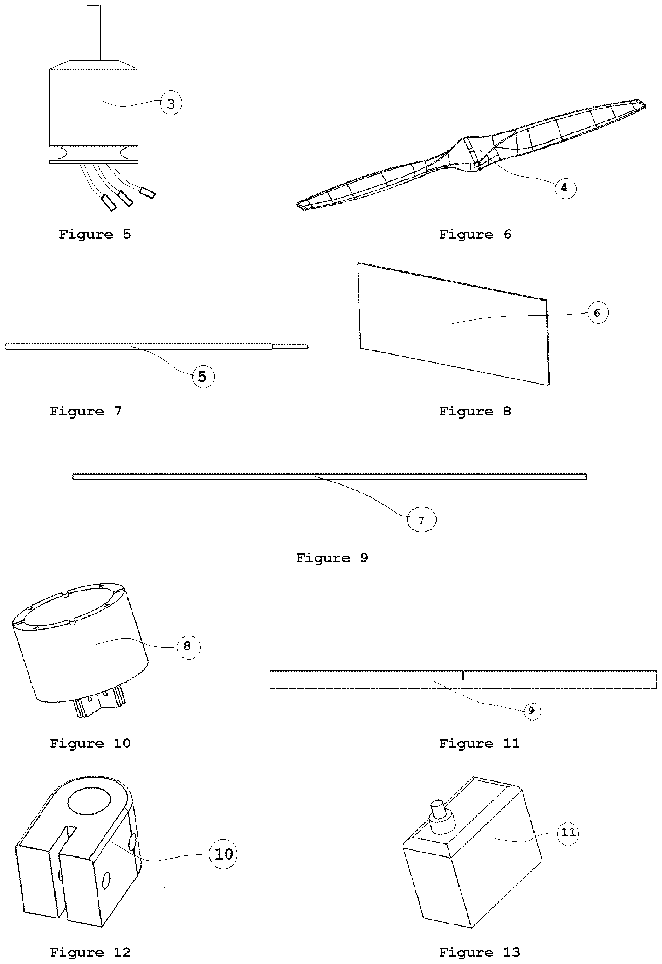

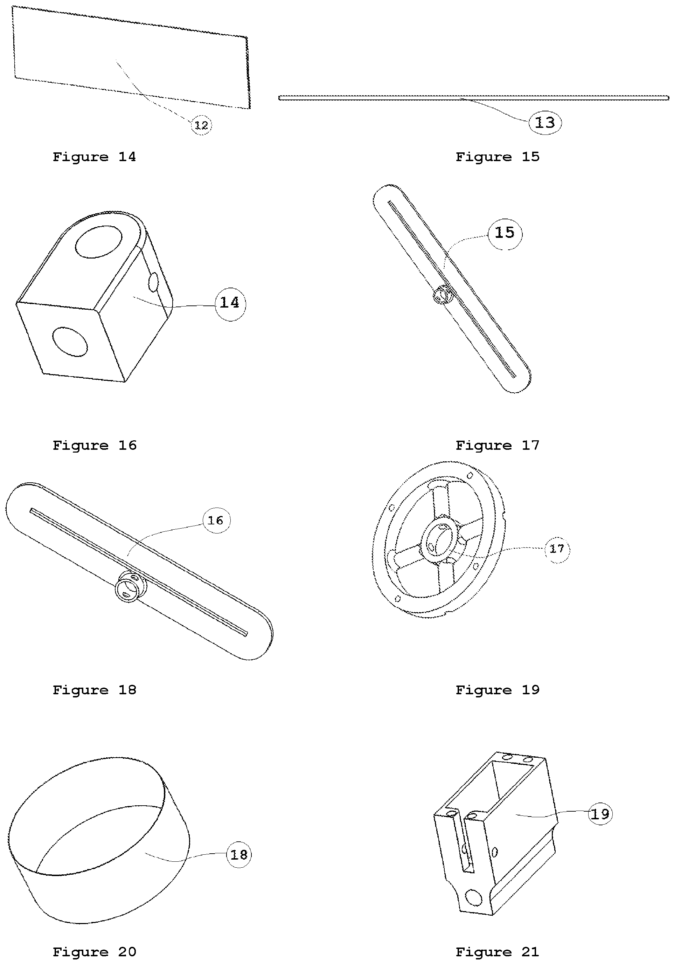

Instead of them, in the new rotor system structure there are hinged stabilizing flaps (6) the details of which are shown in the Fig. 1 and Fig. 8 in order for the helicopter to compensate for the torque generated by the main rotor and make maneuvers around its own axis. There are deflecting flaps (12) the details of which are shown in the Fig. 1 and Fig. 14 in order to provide the helicopter with an ability to move forward, backward, right and left. Details of these hinged stabilizing flaps (6) and deflecting flaps (12) which are of critical importance for the new rotor system are described below.

The invention, at its most basic form, is a rotor system for a rotor air vehicle comprising an outer frame which constitutes the main body of the rotor system in a suitable structure to accommodate moving and fixed components and allow the rotation of a propeller (4) in its inner zone, and offers at least two mutual openings through which the air will enter the system and leave the system, and characterized by a propeller (4) which is located inside the aforementioned outer frame and centrally connected to the ceiling of the outer frame in such a way that its front face will be pointing at the inner zone and function as the main rotor, and a motor to generate the required torque to run the said propeller (4), the hinged stabilizing flaps (6) which are positioned against the front face of the said propeller (4) and have planar plates extending in the radial direction towards the outer frame from a central hub (8) facing the propeller (4) center and fully or nearly perpendicular to the centerline of the propeller (4) and meet the torque requirements by which the said plates move around the axes parallel to the rotation plane of the propeller (4) by adjusting their angles with respect to the rotation plane, a motor to actuate the hinged stabilizing flaps (6), and deflecting flaps (12) which are located at the other side of the hinged stabilizing flaps (6), have and are constituted from the planar plates fully or nearly perpendicular to the centerline of the propeller (4) and allow the air vehicle to move forward, backward, right and left by rotating the aforementioned plates in the desired direction by means of motors.

The aforementioned outer frame comprises of the end rings (1) which are circular or considerably circular and form a cylindrical inner zone on a large scale by positioning them fully or nearly parallel to each other in such a way that their centers are lined up on the same vertical axis and the side support rods (5) which are suitable to fix the positions of the end rings (1) with respect to each other, line up around the end ring (1) perimeter extending from one circle arc to another, connects the end rings (1) with each other and also forms a surface to install the components located inside the system.

### A preferred embodiment working in accordance with the principles of the invention is as follows :

Two end rings (1) located at the top and bottom, which are positioned completely or considerably parallel to each other are used in the invention in order to form the main body of the rotor system. Form of the end rings (1) are completely or considerably circular. The aforementioned end rings (1) may preferably be made of aluminum composite material. An upper mount brace (2), as shown in the Figure 1, is used in such a way that it passes through the center of one of the aforementioned end rings (1) located at the top and extends along with its diameter. The upper mount brace (2) may preferably be made of aluminum. The center of the end ring (1) overlaps the center of the upper mount brace (2). An electric motor (3), preferably a brushless electric motor (3) is placed centrally onto the bottom surface of the aforementioned upper mount brace (2). The said electric motor (3) supplies the input torque necessary for the operation of the propeller (4) which provides the lifting force for the air vehicle. The said propeller (4) is integrated to the electric motor (3) located at the center of the ring and the upper mount brace (2). Propeller (4) has two blades for the preferred embodiment. There may be more blades for the different embodiments.

The aforementioned upper and lower end rings (1) positioned parallel to each other are concentric. There are side support rods (5) which fix the end ring (1) located at the bottom to the end ring (1) located at the top and extends from one circle arc to the other's circle arc. The side support rods (5) may preferably be made of aluminum. Quantity of the side support rods (5) may be two, three, four, five, six, seven, eight or more. In the preferred embodiment there are eight side support rods (5).

There are four hinged stabilizing flaps (6) positioned to meet the front face of the propeller (4) in order to provide stability and rotation of the helicopter on its own axis. These hinged stabilizing flaps (6) extend from a central hub (8) corresponding to the propeller (4) center towards the side support rods (5) which connect the rings. The hinged stabilizing flaps (6) extend on the hinged stabilizing flap rods (7) which are connected to the side support rods (5) by extending from the central hub (8). The hinged stabilizing flaps (6) are in the form of a planar quadrangle as demonstrated in the Figure 8. They are preferably rectangular in shape and the hinged stabilizing flap rods (7) extend from one short edge to the other short edge. These hinged stabilizing flap rods (7) extending from one short edge to the other short edge are terminated by connecting them to the central hub (8) from one end and to the side support rods (5) from the other end. The hinged stabilizing flap rods (7) are made of carbon in the preferred embodiment.

The working principle of the hinged stabilizing flap (6) is as follows:
The air blown downward by the propeller (4) strikes the hinged stabilizing flaps (6) and compensates for the anti-torque generated by the rotation of the propeller (4). Additionally, rotation of the helicopter around its own axis is provided by positioning (rotating around its own axis) the hinged stabilizing flaps (6) which will increase / decrease the effect of the air flowing downward in a vectorial manner by means of a servo motor (11) integrated to the center of the system.

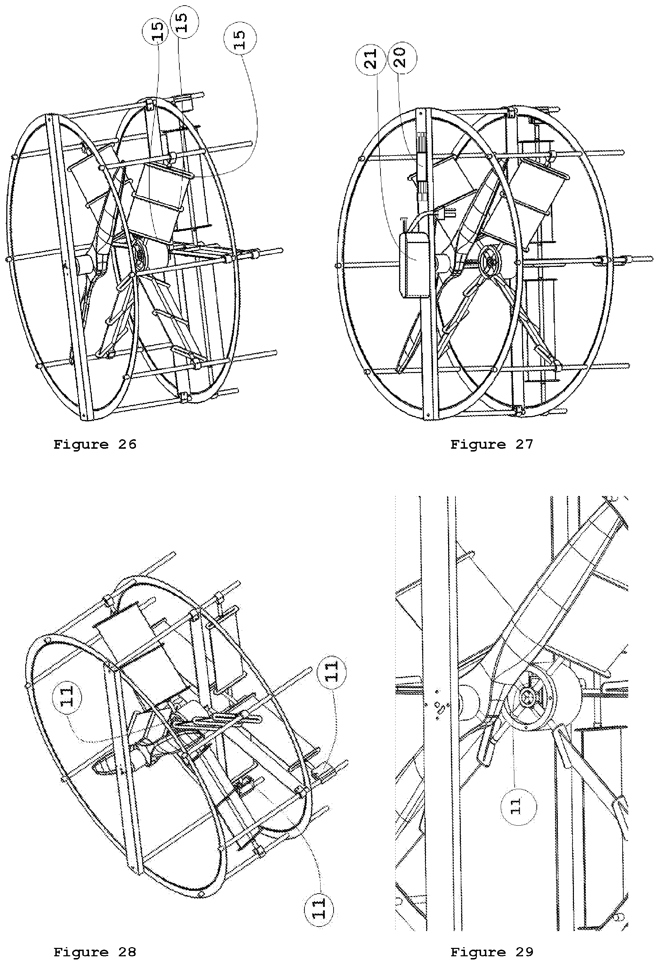

In one embodiment, there are hinged stabilizing flap holders (15) which are located at the edges of the hinged stabilizing flaps (6) close to the center and/or to the side support rods (5) and wrapping and holding these edges completely or, at least, partially. The hinged stabilizing flap holders (15) are shown in the Figure 17 in details. Their locations are demonstrated in the Figure 1 and Figure 26 as well. In some embodiments, they are also located in the middle of the hinged stabilizing flaps (6).

In one embodiment, there are a total of twelve hinged stabilizing flap holders (15), where each hinged stabilizing flap (6) has three of them, in order to fix the hinged stabilizing flaps (6) to the hinged stabilizing flap rods (7).

A servo motor (11) and a bevel gear (22), which enable positioning by actuating the hinged stabilizing flaps (6) are provided in the central hub (8). The hinged stabilizing flap rods (7) are connected to the bevel gears (22) in the central hub (8). The movement is transmitted from the servo motor (11) to the bevel gears (22), from the bevel gears (22) to the hinged stabilizing flap rods (7) and, in this way, to the hinged stabilizing flaps (6). The central hub (8) is used to secure the servo motor (11) and bevel gear (22) involved in positioning.

These systems are transferred to the servo motors (11) with the help of cables brought outside the system by means of the upper mount brace (2).

Central hub cap (17) with four holes provided on it is used to ensure that the hinged stabilizing flap rods (7) are fully seated on the bevel gear (22) and are fastened to the central hub (8). Central hub cap (17) is preferably manufactured from a plastic material with a three-dimensional printer. The central hub (8) is a component manufactured from a plastic material using a three-dimensional printer in the preferred embodiment. It is the radial struts (9) which center the central hub (8) and keep it fixed in such a way as to be positioned on the central axes of the end rings (1). The radial struts (9) connect the central hub (8) to the side support rods (5). In more detail, the radial struts (9) extend from the central hub (8) to the side support rods (5) and fasten to the side support rods (5) by means of the radial strut clamping couplers (10). Number of the radial struts (9) are two, where mutually located, or more for stable positioning. There are four in the preferred embodiment. The radial struts (9) are positioned at the lower part of the central hub (8). They rare located at the bottom of the hinged stabilizing flaps (6).

Radial strut clamping couplers (10) which fix the radial struts (9) to the side support rods (5) are a fixing component in a form the inside of which is drilled and slotted as shown in the Figure 12. It is preferably manufactured from a plastic material with a three-dimensional printer.

There are deflecting flaps (12) located at the bottom of the hinged stabilizing flap (6) and the radial struts (9) in order to move the helicopter forward, backward, right and left. In the preferred embodiment, there are four deflecting flaps (12) where two interconnected deflecting flaps (12) are connected to one servo motor (11) and the other two are connected to another servo motor (11). Result of the experiments carried out has revealed that the use of four deflecting flaps (12) provides optimum maneuverability.

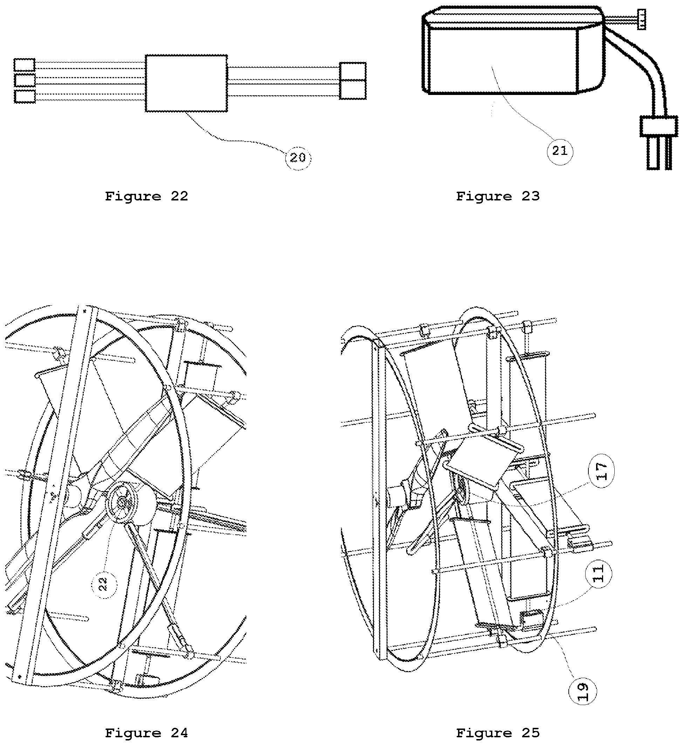

The servo motors (11) which move the deflecting flaps (12) are located at the point where the deflecting flaps (12) are connected to the side support rods (5). A servo motor housing (19) is used to integrate the servo motors (11) to the side support rods (5). The views of the aforementioned servo motors (11) and the servo motor housings (19) connecting them to the side support rods (5) are provided in the Figure 25 in details. The said servo motor housings (19) are preferably manufactured from a plastic material with a three-dimensional printer.

The deflecting flap rods (13) are used in order to attach these deflecting flaps (12) to the side support rods (5). The deflecting flap rods (13) are preferably made of carbon. Rod clamping couplers (14) are used in order to fix the deflecting flaps (12) to the side support rods (5). The rod clamping couplers (14) of which the detailed view is provided in the Figure 16 are preferably manufactured from a plastic material with a three-dimensional printer.

The deflecting flaps (12) extend on the deflecting flap rods (13) which are connected to the side support rods (5) by extending from the central zone. The deflecting flaps (12) are in the form of a planar quadrangle as demonstrated in the Figure 14. They are preferably rectangular in shape and the aforementioned deflecting flap rods (13) extend from one short edge to the other short edge. A part of these deflecting flap rods (13) extending from one short edge to the other short edge are terminated by connecting them to the side support rods (5) from one end. The other part of them is connected to the servo motors (11) from their ends. The deflecting flap rods (13) are made of carbon in the preferred embodiment.

Deflecting flap holders(16) are used in order to fix the deflecting flaps (12) to the deflecting flap rods (13). In one embodiment, there are deflecting flap holders(16) which are located at the deflecting flaps (12) short edges which are close to the center and/or to the side support rods (5) and wrapping and holding these short edges completely or, at least, partially. Deflecting flap holders(16) are shown in the Figure 18 in a detailed manner. Their locations are demonstrated in the Figure 1. Deflecting flap holders(16) are preferably manufactured from a plastic material using a three-dimensional printer. Eight pieces of deflecting flap holders(16) are used totally where each hinged deflecting flap (12) has two of them.

In one embodiment, a sleeve bushing(18) is placed on the grooves opened in the end ring (1) in order to effectively utilize the lifting force generated by the two-blade propeller (4) and enhance the overall strength of the system. The sleeve bushing (18) made of a polycarbonate material. It is preferably transparent polycarbonate. The sleeve bushing(18) maximizes the thrust force by preventing the air flowing downward inside the system from quitting the system.

An electronic speed controller (20) is provided in the system in order to drive the brushless electric motor (3) used in the helicopter described above. At the same time, there is a battery (21) in the system. The abovementioned electronic speed controller (20) is demonstrated in the Figure 22 and the battery (21) in the Figure 23. In the preferred embodiment, these two components are positioned on the upper mount brace (2) included in the system and their locations in the rotor system are demonstrated in the Figure 27. All the energy required for the system is provided by the battery (21). No fuel is used.

### An embodiment according to the principles of the invention described above with the different embodiments, together with details, is as follows:

In the invention, two 4 mm thick aluminum composite end rings (1) were used on the top and at the bottom to form the main body of the helicopter. A 40x60 mm aluminum upper mount brace (2) was used in order to fix the 1.8 kW brushless electric motor (3) to the center. Two-bladed propeller (4) was used in order to obtain the required lift in the helicopter. Eight pieces of 10 mm diameter aluminum side support rods (5) are used to fix the lower end ring (1) to the upper end ring (1). Four hinged stabilizing flaps (6) are used in order to provide stability and rotation of the helicopter on its own axis. Hinged stabilizing flap rods (7) made of carbon are used to fasten these hinged stabilizing flaps (6) to the side support rods (5) and the central hub (8). The central hub (8) manufactured from a plastic material using three-dimensional printer is used to fix the servo motor (11) and the bevel gear (22) which position the hinged stabilizing flaps (6). A 3 mm thick, 40 mm wide aluminum radial strut (9) was used to center and secure the central hub (8). Four pieces of radial strut clamping couplers (10) with grooves, which are manufactured from a plastic material using three-dimensional printer are used to secure the radial struts (9) to the side support rods (5). Three servo motors (11) are used in order to actuate the hinged stabilizing flaps (6) and the deflecting flaps (12). A total of four deflecting flaps (12), where two of them are connected to one servo motor (11) and the other two are connected to another servo motor (11), are employed in order to allow the helicopter to turn right and left and move forward and backward. Deflecting flap rods (13) made of carbon are used to attach these deflecting flaps (12) to the side support rods (5). Two carbon rod clamping couplers (14) with two holes drilled, which are manufactured from the plastic material through a three-dimensional printer are used in order to fix the deflecting flaps (12) to the side support rods (5). A total of twelve, being three hinged stabilizing flap holders (15) for each hinged stabilizing flap (6), which are manufactured from a plastic material using a three dimensional printer, are used in order to fix the hinged stabilizing flaps (6) to the carbon hinged stabilizing flap rods (7). A total of eight, being two deflecting flap holders(16) for each hinged deflecting flap (12), which are manufactured from a plastic material using a three dimensional printer, are used in order to fix the deflecting flaps (12) to the carbon deflecting flap rods (13). A central hub cap (17) provided with four holes on it and manufactured from a plastic material using a three dimensional printer, is used in order for the carbon hinged stabilizing flap rods (7) to be fully seated on the bevel gear (22) and be attached to the central hub (8). A 1.5 mm thick polycarbonate transparent sleeve bushing(18) placed on the grooves opened in the end ring (1) is used in order to effectively utilize the lift generated by the two-blade propeller (4) and enhance the overall strength of the system. A servo motor housing (19) manufactured from a plastic material using a three dimensional printer, is used to fix the servo motors (11) employed for the deflecting flaps (12) to the side support rods (5). A one hundred ampere electronic speed controller (20) and five-cell 18.5 volt lithium polymer battery (21) are used in order to drive the brushless electric motor (3) employed in the helicopter.

In summary, the invention of which the details and different embodiments have been explained above is based on the principle that a single propeller (4) is used even though there is no tail mechanism and the torque generated by this propeller (4) is provided by means of the hinged stabilizing flaps (6).

### The operation of the described rotor system is briefly as follows:

Helicopter is kept in balance by the hinged stabilizing flaps (6) which compensate for the torque generated by the propeller (4) when the brushless electric motor (3) installed to the upper mount brace (2) starts running in the system which is secured between two end rings (1) by supporting the side support rods (5). The rotation of helicopter around its axis is also achieved through such hinged stabilizing flaps (6), by positioning the bevel gear (22) operated by the servo motor (11) integrated to the central hub (8). The deflecting flaps (12) located at the bottom of the helicopter can be actuated by the signals communicated to the servo motor (11) and in this way, it will be possible to move helicopter forward, backward, right and left.

Passenger or cargo cabin is positioned around the rotor system described in the subject system of the application filed. Such positioning must be designed in such a way that the top and bottom sides of the rotor system will be left empty. As a result, additional elements required to be transported by the rotor system such as a cabin or camera need to occupy some or all of the outer perimeter of the rotor system in such a way that the flight dynamics of the rotor system will not be disturbed.

### Explanations of the Figures:

Figure 1: General view of the rotor construction
Figure 2: General view of the ring
Figure 3: Detailed view of the ring
Figure 4: Detailed view of the upper mount brace
Figure 5: Detailed view of the brushless electric motor
Figure 6: Detailed view of the two-bladed propeller
Figure 7: Detailed view of the side support rods
Figure 8: Detailed view of the hinged stabilizing flaps
Figure 9: Detailed view of the hinged stabilizing flap rods
Figure 10: Detailed view of the central hub
Figure 11: Detailed view of the radial strut
Figure 12: Detailed view of the radial strut clamping coupler
Figure 13: Detailed view of the servo motor
Figure 14: Detailed view of the deflecting flaps
Figure 15: Detailed view of the deflecting flap rods
Figure 16: Detailed view of the rod clamping couplers
Figure 17: Detailed view of the hinged stabilizing flap holders
Figure 18: Detailed view of the hinged deflecting flap holders
Figure 19: Detailed view of the central hub cap
Figure 20: Detailed view of the sleeve bushing
Figure 21: Detailed view of the servo motor housing
Figure 22: Detailed view of the electronic speed controller
Figure 23: Detailed view of the battery
Figure 24: Diagram showing the position of the bevel gear in the rotor system assembly
Figure 25: Diagram showing the positions of servo motor, central hub cap, servo motor housing in the rotor system assembly
Figure 26: View of the hinged stabilizing flap holders in the rotor system assembly
Figure 27: View of the battery and the electronic speed controller in the rotor system assembly
Figure 28: Diagram showing position of the servo motors operating the deflecting flaps in the rotor system assembly
Figure 29: Diagram showing position of the servo motor operating the hinged stabilizing flaps in the rotor system assembly

### References

1- End ring
2- Upper mount brace
3- Electric motor
4- Propeller
5- Side support rods
6- Hinged stabilizing flaps
7- Hinged stabilizing flap rod
8- Central hub
9- Radial strut
10- Radial strut clamping coupler
11- Servo motor
12- Deflecting flaps
13- Deflecting flap rods
14- Rod clamping coupler
15- Hinged stabilizing flap holders
16- Deflecting flap holders
17- Central hub cap
18- Sleeve bushing
19- Servo motor housing
20- Electronic speed controller
21- Battery
22- Bevel gear

## Claims

1. A rotor system for a rotor air vehicle, comprising an outer frame which constitutes the main body of the rotor system, in a structure suitable to accommodate moving and fixed components in its inner zone and allow the rotation of a propeller (4), and offers at least two mutual openings through which the air will enter the system and leave the system,
- the propeller (4) which is located inside the aforementioned outer frame and centrally connected to the ceiling of the outer frame in such a way that its front face will be pointing at the inner zone and function as a main rotor, and a motor to generate the required torque to run the said propeller (4),
- hinged stabilizing flaps (6) which are positioned against the front face of the said propeller (4) and have planar plates extending in the radial direction towards the outer frame from a central hub (8) facing the center of the propeller (4) and fully or nearly perpendicular to the centerline of the propeller (4) and meeting the torque requirements by which the said plates move around the axes parallel to the rotation plane of the propeller (4) by adjusting their angles with respect to the rotation plane,
- a motor to actuate the hinged stabilizing flaps (6), and
- deflecting flaps (12) which are located at the other side of the hinged stabilizing flaps (6), being constituted from planar plates fully or nearly perpendicular to the centerline of the propeller (4) and provide the air vehicle to move forward, backward, right and left by rotating the aforementioned plates in the desired direction by means of motors, wherein the outer frame is **characterized in** comprising,
- end rings (1) which are circular or considerably circular and form a cylindrical inner zone on a large scale by positioning them fully or nearly parallel to each other in such a way that their centers are lined up on the same vertical axis; and
- side support rods (5) which are suitable to fix the positions of the end rings (1) with respect to each other, line up around the end ring (1) perimeter extending from one circle arc to another, connecting the end rings (1) with each other and also forming a surface to install the components located inside the system.

2. The rotor system according to Claim 1, wherein the side support rods (5) are made of aluminum.

3. The rotor system according to the Claim 1, wherein the outer frame comprises an upper mount brace (2) holding the propeller (4) and the motor which runs the propeller (4) and passing through the centers of the end ring (1) which is located at the top.

4. The rotor system according to Claim 1, wherein the side support rods (5) connect the hinged stabilizing flaps (6) to the outer frame.

5. The rotor system according to Claim 1, wherein the hinged stabilizing flaps (6) are extended on hinged stabilizing flap rods (7) which are connected to the side support rods (5) by extending from the central hub (8).

6. The rotor system according to Claim 1, wherein it comprises grooves opened in the end ring (1) in order to effectively utilize the lift generated by the two-blade propeller (4) and enhance the overall strength of the system and a sleeve bushing (18), preferably made of a polycarbonate material, which is placed on these grooves and maximizes the thrust force by preventing the air flowing downward from quitting the system.

7. The rotor system according to Claim 3, wherein a battery (21) and an electronic speed controller (20) are located on an upper mount brace (2) available in the system.

8. An air vehicle comprising a rotor system according to Claim 1.

9. The air vehicle according to Claim 8, wherein it comprises a cabin, especially a passenger cabin or a cargo cabin, surrounding all or a part suitable for assuring stability, of the circumferential outer periphery of the outer frame forming a cylindrical inner zone, and leaving the top and bottom of the rotor system open.

10. A rotor system for a rotor air vehicle according to Claim 1 **characterized in** comprising,
- two end rings (1) being made of aluminum composite and located at the top and bottom to form the main body of the rotor system,
- a brushless electric motor (3) and an aluminum upper mount brace (2) for fixing the said electric motor (3) to the center,
- the propeller (4) being preferably a two-blade propeller (4), for obtaining a lifting force,
- the side support rods (5) being eight aluminum side support rods (5), in order to fix the lower end ring (1) to the upper end ring (1),
- four hinged stabilizing flaps (6) to provide the air vehicle with stability and rotation around its own axis,
- carbon hinged stabilizing flap rods (7) for attaching these hinged stabilizing flaps (6) to the side support rods (5) and the central hub (8),
- a servo motor (11) and bevel gears (22) which position the hinged stabilizing flaps (6)
- the central hub (8) made of plastic in order to fix the servo motor (11) and the bevel gears (22) which position the hinged stabilizing flaps (6),
- aluminum radial strut (9) for centering and fixing the central hub (8),
- plastic radial strut clamping couplers (10) for fixing the radial struts (9) to the side support rods (5),
- three servo motors (11) dedicated to actuate the hinged stabilizing flaps (6) and the deflecting flaps (12), a total of four deflecting flaps (12), where two of them are connected to one servo motor (11) and the other two are connected to another servo motor (11), which are employed in order to allow the helicopter to turn right and left and move forward and backward,
- deflecting flap rods (13) made of carbon used to attach these deflecting flaps (12) to the side support rods (5),
- carbon rod clamping couplers (14) made of plastic to fix the deflecting flaps (12) to the side support rods (5),
- hinged stabilizing flap holders (15) made of plastic material in order to fix the hinged stabilizing flaps (6) to the hinged stabilizing flap rods (7) made of carbon,
- deflecting flap holders (16) made of plastic material in order to fix the deflecting flaps (12) to the carbon deflecting flap rods (13),
- a polycarbonate transparent sleeve bushing (18) placed on grooves opened in the end ring (1) in order to effectively utilize the lifting force generated by the two-blade propeller (4) and enhance the overall strength of the system,
- a servo motor housing (19) to fix the servo motors (11), employed for the deflecting flaps (12), to the side support rods (5), and
- an electronic speed controller (20) and a lithium polymer battery (21) in order to drive the brushless electric motor (3) used in the helicopter.

11. An air vehicle comprising a rotor system according to the claim 10.

12. The air vehicle according to Claim 11, wherein it comprises a cabin, especially a passenger cabin or a cargo cabin, surrounding all or a part suitable for assuring stability, of the circumferential outer periphery of the outer frame forming a cylindrical inner zone, and leaving the top and bottom of the rotor system open.

## Patentansprüche

1. Ein Rotorsystem für ein Rotorluftfahrzeug umfasst einen Außenrahmen, der im Innenbereich einer Struktur den Hauptkörper des Rotorsystems darstellt, wobei die Struktur geeignet ist, bewegliche und stationäre Komponenten aufzunehmen, und mindestens zwei gegenseitige Öffnungen zur Verfügung stellt, welche die Drehung eines Propellers (4) ermöglichen, und wodurch die Luft in das System eintritt und aus dem System austritt,
- einen Propeller (4), der innerhalb des oben erwähnten Außenrahmens angeordnet und zentral mit der Decke des Außenrahmens verbunden ist, so dass die Vorderseite dem inneren Bereich zugewandt ist und als Hauptrotor dient, und einen Motor zum Erzeugen des Drehmoments, das zum Bewegen des genannten Propellers (4) erforderlich ist,
- gelenkige Stabilisierungsklappen (6), die an der Vorderseite des Propellers (4) und der Mitte des Propellers (4) zugewandt angeordnet sind, vollständig oder beinahe senkrecht zur Mittellinie des Propellers (4) liegen, und die ebene Platten umfassen, die die sich von einer zentralen Nabe (8) in radialer Richtung zum Außenrahmen erstrecken, wobei die zentrale Nabe den Bedarf an Drehmoment erfüllt, das durch Einstellen der Winkel der genannten Platten für die Bewegung der Propellers (4) entlang der Achsen parallel zur Rotationsebene sorgt,
- einen Motor zum Betätigen der gelenkigen Stabilisierungsklappen (6) und
- Führungsklappen (12), die aus ebenen Platten bestehen, die auf der anderen Seite der gelenkigen Stabilisierungsklappen (6) angeordnet sind, vollständig oder fast vollständig senkrecht zur Mittellinie des Propellers (4) liegen, und durch Drehen der oben genannten Platten mittels Motoren in die gewünschte Richtung dafür sorgen, dass das Luftfahrzeug sich vorwärts, rückwärts, rechts und links bewegt, wobei der Außenrahmen **dadurch gekennzeichnet ist, dass** er
- Endringe (1), die kreisförmig oder beinahe kreisförmig sind und einen im Wesentlichen zylindrischen Innenbereich bilden, indem ihre Zentren genau oder beinahe genau parallel zueinander angeordnet werden, so dass sie entlang derselben senkrechten Achse ausgerichtet sind, und
- seitliche Stützstangen (5), die geeignet sind, die Positionen der Endringe (1) relativ zueinander zu sichern, sie um den Umfang des Endringes (1) auszurichten, der sich von einer Ringfeder zur anderen erstreckt, die Endringe (1) miteinander verbindet und gleichzeitig eine Oberfläche zum Montieren von im System angeordneten Komponenten bildet.

2. Rotorsystem nach Anspruch 1, wobei die seitlichen Stützstangen (5) aus Aluminium hergestellt sind.

3. Rotorsystem nach Anspruch 1, wobei der Außenrahmen ein oberes Montageband (2) aufweist, das den Propeller (4) und den Motor, der den Propeller (4) antreibt, festhält und entlang der Zentren des oberen Endringes (1) verläuft..

4. Rotorsystem nach Anspruch 1, wobei die seitlichen Stützstangen (5) die gelenkigen Stabilisierungsklappen (6) mit dem Außenrahmen verbinden.

5. Rotorsystem nach Anspruch 1, wobei sich die gelenkigen Stabilisierungsklappen (6) über Stangen (7) für gelenkige Ausgleichsklappen erstrecken, die mit den seitlichen Stützstangen (5) verbunden sind, indem sie sich von der zentralen Nabe (8) erstrecken.

6. Rotorsystem nach Anspruch 1, wobei es Nuten, die um den durch die Zwei-Blatt-Propeller (4) erzeugten Hubeffekt effektiv zu nutzen und die Gesamtfestigkeit des Systems zu erhöhen in dem Endring (1) gebildet wurden, und eine Hülsenbuchse (18) vorzugsweise aus einem Polykarbonatmaterial umfasst, die auf diesen Nuten angeordnet ist, und die Vortriebskraft maximiert, indem sie verhindert, dass die nach unten fließende Luft aus dem System austritt.

7. Rotorsystem nach Anspruch 3, wobei ein Akku (21) und ein elektronisches Geschwindigkeitssteuergerät (20) auf einem oberen Montageband (2) angeordnet sind, das in dem System vorhanden ist

8. Ein Luftfahrzeug mit einem Rotorsystem nach Anspruch 1.

9. Ein Luftfahrzeug nach Anspruch 8 mit einer Kabine, insbesondere mit einer Passagierkabine oder einer Frachtkabine, die den äußeren Umfang des einen zylindrischen Innenbereich bildenden Außenrahmens teilweise oder ganz umgibt und die Ober- und Unterseite des Rotorsystems offen lässt.

10. Ein Rotorsystem für ein Rotorluftfahrzeug nach Anspruch 1, **dadurch gekennzeichnet, dass** es
- zwei Endringe (1) aus Aluminiumverbundwerkstoff, die den Hauptkörper des Rotorsystems bilden und im oberen Teil und im unteren Teil angeordnet sind,
- ein oberes Montageband (2) aus Aluminium zum Befestigen des bürstenlosen Elektromotors (3) und des oben genannten Elektromotors (3) in der Mitte,
- einen Propeller (4), vorzugsweise ein Zwei-Blatt-Propeller (4), um eine Hubkraft zu erreichen,
- seitliche Stützstangen (5) mit acht seitlichen Stützstangen (5) aus Aluminium zum Befestigen des unteren Endringes (1) am oberen Endring (1),
- vier gelenkige Stabilisierungsklappen (6) für Stabilität und Rotation um die eigene Achse des Luftfahrzeuges,
- Stangen (7) für Stabilisierungsklappen mit Karbon-Gelenken zum Befestigen dieser gelenkigen Stabilisierungsklappen (6) an den seitlichen Stützstangen (5) und der zentralen Nabe (8),
- einen Servomotor (11) und Kegelräder (22), die gelenkigen Stabilisierungsklappen (6) positionieren,
- zentrale Nabe (8) aus Kunststoff zur Befestigung der Kegelräder (22), die den Servomotor (11) und die schwenkbaren Stabilisierungsblätter (6) positionieren,
- Radialspanner (9) aus Aluminium zum Zentrieren und Fixieren der zentralen Nabe (8),
- radiale Klemmverbindungen (10) aus Kunststoff zur Befestigung der Radialstützen (9) an den seitlichen Stützstangen (5),
- drei Servomotoren (11) zur Betätigung der gelenkigen Stabilisierungsklappen (6) und der Führungsklappen (12), wobei zwei von insgesamt vier Führungsklappen (12) mit einem Servomotor (11) verbunden und die anderen beiden mit einem anderen Servomotor (11) verbunden sind, mit dem der Hubschrauber sich nach rechts und links drehen und sich vorwärts und rückwärts bewegen kann,
- Führungsstangen (13) aus Karbon zur Befestigung der Führungsklappen (12) an den seitlichen Stützstangen (5),
- Karbonstangen-Klemmverbindungen (14) aus Kunststoff zur Befestigung der Führungsklappen (12) an den seitlichen Stützstangen (5),
- gelenkige Stabilisierungsdeckelhalter (15) aus Kunststoff zur Befestigung der gelenkigen Stabilisierungsklappen (6) an den Karbonstangen (7) für gelenkige Ausgleichsklappen ,
- Führungsklappenhalter (16) aus Kunststoff zur Befestigung der Führungsklappen (12) an den Karbon-Lenkstangen (13),
- eine transparente Hülsenbuchse (18) aus Polykarbonat, die in den Nuten an dem Endringes (1) angeordnet ist, um vom Zwei-Blatt-Propeller (4) erzeugte Hubkraft effektiv zu nutzen und die Gesamtfestigkeit des Systems zu erhöhen,
- ein Servomotorgehäuse (19) zum Befestigen der für die Führungsklappen (12) verwendeten Servomotoren (11) an den seitlichen Stützstangen (5) und
- ein Geschwindigkeitssteuergerät (20) und ein Lithium-Polymer-Akku (21) zum Antreiben des im Hubschrauber verwendeten bürstenlosen Elektromotors (3) aufweist.

11. Ein Luftfahrzeug mit einem Rotorsystem nach Anspruch 10.

12. Ein Luftfahrzeug nach Anspruch 11, wobei es eine Kabine, insbesondere eine Passagierkabine oder eine Frachtkabine aufweist, die einen geeigneten Teil oder den gesamten äußeren Umfang des einen zylindrischen Innenbereich bildenden Außenrahmens umgibt und die Ober- und Unterseite des Rotorsystems offen lässt.

## Revendications

1. Un système de rotor pour un véhicule de rotor à air, comprenant un châssis externe qui représente le corps principal du système de rotor dans une structure appropriée pour loger des composants mobiles et fixes dans sa propre zone interne et permet la rotation d'une hélice (4) et qui offre au moins deux ouvertures mutuelles par lesquelles l'air entrera dans le système et en sortira,
- l'hélice (4) étant située à l'intérieur du châssis externe mentionné ci-dessus et étant reliée de manière centrale au plafond du châssis externe de telle sorte que sa face avant soit dirigée vers la zone interne et fonctionne comme un rotor principal et un moteur permettant de générer le couple requis pour faire tourner ladite hélice (4),
- des ailes stabilisateurs articulées (6) qui sont positionnés contre la face avant de ladite hélice (4) et dont les plaques planes s'étendent dans la direction radiale vers le bâti extérieur à partir d'un moyeu central (8) faisant face au centre de l'hélice (4) et complètement ou presque perpendiculairement à l'axe de l'hélice (4) et répondant aux exigences de couple selon lesquelles lesdites plaques se déplacent autour d'axes parallèles au plan de rotation de l'hélice (4) en ajustant leurs angles par rapport au plan de rotation,
- un moteur pour actionner les ailes de stabilisation articulées (6), et
- des ailes de déviation (12) qui sont situés de l'autre côté des ailes de stabilisation articulées (6) étant constitués de plaques planes complètement ou presque perpendiculairement à l'axe de l'hélice (4) et permettant au véhicule aérien de se déplacer en avant, en arrière et à droite et laissé en faisant tourner les plaques mentionnées ci-dessus dans le sens souhaité au moyen de moteurs, le châssis extérieur étant **caractérisé en ce qu'**il comprend,
- des bagues d'extrémité (1) circulaires ou considérablement circulaires formant une zone interne cylindrique à grande échelle en les positionnant complètement ou presque parallèlement les unes aux autres de telle sorte que leurs centres soient alignés sur le même axe vertical; et
- des tiges latérales de soutien (5) permettant de fixer les positions des bagues d'extrémité (1) les unes par rapport aux autres, alignées autour du périmètre de la bague d'extrémité (1) s'étendant d'un arc de cercle à un autre, reliant les bagues d'extrémité (1) entre eux et formant également une surface pour installer les composants situés à l'intérieur du système.

2. Système de rotor selon la revendication 1, dans lequel les tiges de support latérales (5) sont réalisées en aluminium.

3. Système de rotor selon la revendication 1, dans lequel le châssis externe comprend une entretoise de montage supérieure (2) maintenant l'hélice (4) et le moteur qui fait fonctionner l'hélice (4) et passe au centre de la bague d'extrémité (1) qui se trouve au sommet.

4. Système de rotor selon la revendication 1, dans lequel les tiges de support latérales (5) relient les ailes de stabilisation articulées (6) au châssis externe.

5. Système de rotor selon la revendication 1, dans lequel les ailes de stabilisation articulées (6) sont étendues sur des tiges de volet de stabilisation articulées (7) qui sont raccordées aux tiges de support latérales (5) en s'étendant depuis le moyeu central (8).

6. Système de rotor selon la revendication 1, dans lequel il comprend des rainures ouvertes dans la bague d'extrémité (1) afin d'utiliser efficacement la portance générée par l'hélice à deux pales (4) et d'améliorer la résistance globale du système, ainsi qu'une douille de manchon (18), qui est de préférence en polycarbonate, placée sur ces gorges et maximise la force de poussée en empêchant le flux d'air descendant de quitter le système.

7. Système de rotor selon la revendication 3, dans lequel une batterie (21) et un régulateur de vitesse électronique (20) sont situés sur une entretoise de montage supérieure (2) disponible dans le système.

8. Véhicule aérien comprenant un système de rotor selon la revendication 1.

9. Véhicule aérien selon la revendication 8, comprenant une cabine, notamment une cabine passagers ou une cabine cargo, entourant la totalité ou une partie propre à assurer la stabilité de la périphérie externe circonférentielle du châssis externe formant une zone interne cylindrique, et laissant le haut et le bas du système de rotor ouvert.

10. Système de rotor pour véhicule aérien à rotor selon la revendication 1, **caractérisé en ce qu'**il comprend,
- deux bagues d'extrémité (1) en composite d'aluminium et situées en haut et en bas pour former le corps principal du système de rotor,
- un moteur électrique sans balai (3) et une entretoise de montage supérieure en aluminium (2) pour fixer ledit moteur électrique (3) au centre,
- l'hélice (4) qui est de préférence une hélice à deux pales (4) permettant d'obtenir une force de levage,
- les tiges de support latérales (5) étant constituées de huit tiges de support latérales en aluminium (5), afin de fixer la bague d'extrémité inférieure (1) à la bague d'extrémité supérieure (1),
- quatre ailes de stabilisation articulées (6) pour assurer la stabilité et la rotation du véhicule aérien autour de son propre axe,
- des tiges de volet de stabilisation à charnière en carbone (7) pour fixer ces ailes de stabilisation articulées (6) aux barres de support latérales (5) et au moyeu central (8),
- un servomoteur (11) et des engrenages coniques (22) qui positionnent les ailes de stabilisation articulées (6)
- le moyeu central (8) en plastique pour fixer le servomoteur (11) et les engrenages coniques (22) qui positionnent les ailes de stabilisation articulées (6),
- entretoise radiale en aluminium (9) pour le centrage et la fixation du moyeu central (8),
- des coupleurs de serrage radiaux (10) en plastique pour la fixation des boudins radiaux (9) aux tiges de support latérales (5),
- trois servomoteurs (11) destinés à actionner les ailes de stabilisation articulées (6) et les ailes de renvoi (12), un total de quatre volets de renvoi (12), deux d'entre eux étant reliés à un servomoteur (11) et le deux autres sont reliés à un autre servomoteur (11), utilisés pour permettre à l'hélicoptère de tourner à droite et à gauche et d'avancer et de reculer,
- des tiges d'aile de renvoi (13) en carbone utilisées pour fixer ces ailes de renvoi (12) aux tiges de support latérales (5),
- des coupleurs de serrage de tige de carbone (14) en matière plastique pour fixer les ailes de déviation (12) aux tiges de support latérales (5),
- des supports d'ailes de stabilisation articulées (15) en matière plastique pour la fixation des ailes de stabilisation articulées (6) aux tiges d'ailes de stabilisation articulées (7) en carbone,
- des supports d'ailes de déviation (16) en matière plastique permettant de fixer les ailes de déviation (12) aux tiges d'ailes de déviation en carbone (13),
- une bague de manchon transparente en polycarbonate (18) placée dans des gorges ouvertes dans la bague d'extrémité (1) afin de tirer efficacement parti de la force de levage générée par l'hélice à deux pales (4) et d'améliorer la résistance globale du système,
- un boîtier de servomoteur (19) pour fixer les servomoteurs (11) utilisés pour les ailes de déviation (12) aux tiges de support latérales (5), et
- un régulateur de vitesse électronique (20) et une batterie lithium-polymère (21) pour entraîner le moteur électrique sans balai (3) utilisé dans l'hélicoptère.

11. Véhicule aérien comprenant un système de rotor selon la revendication 10.

12. Véhicule aérien selon la revendication 11, **caractérisé en ce qu'**il comprend une cabine, notamment une cabine passagers ou une cabine cargo, entourant la totalité ou une partie propre à assurer la stabilité de la périphérie externe circonférentielle du châssis externe formant une zone interne cylindrique, et en laissant le haut et le bas du système de rotor ouvert.
